Europäisches Patentamt

European Patent Office

Office européen des brevets

(11) Veröffentlichungsnummer: **0 085 860**

**A1**

(12) **EUROPÄISCHE PATENTANMELDUNG**

(21) Anmeldenummer: 83100445.2

(22) Anmeldetag: 19.01.83

(51) Int.Cl.³: **F 24 J 3/02**

---

(30) Priorität: 20.01.82 DE 3201618

(43) Veröffentlichungstag der Anmeldung:
17.08.83 Patentblatt 83/33

(84) Benannte Vertragsstaaten:
AT BE CH DE FR IT LI NL

(71) Anmelder: **Corbelia GmbH**

**A-5412 Puch 321(AT)**

(72) Erfinder: **Feldgrill, Franz**

**A-5412 Puch 321(AT)**

(74) Vertreter: **Haft, Berngruber, Czybulka**
**Hans-Sachs-Strasse 5**
**D-8000 München 5(DE)**

---

(54) Einrichtung zur Gewinnung von Wärmeenergie aus auf ein Dach fallender Sonnenstrahlung.

(57) Einrichtung zur Gewinnung von Wärmeenergie aus auf ein Dach fallender Sonnenstrahlung weist eine wärmeisolierende Unterschicht (9) auf der Dachschalung (7) bzw. auf der auf der Dachschalung (7) befindlichen abdichtenden Dachabdeckung (8), ein auf der wärmeisolierenden Unterschicht (9) liegendes schwarzes Kollektorblech (12) und eine durch Bahnen gebildete lichtdurchlässige Abeckung (22) auf, die gut auf der Dachschalung (7) befestigt, in Richtung vom First zur Traufe verlaufende Balken (13) angeordnet ist. Ferner ist eine Flüssigkeit führende Rohrschlange (34) zwischen Kollektorblech (12) und lichtdurchlässiger Abdeckung (22) vorgesehen. Um eine nach außen abgedichtete lichtdurchlässige Abdeckung (22) zu bilden, stoßen deren einzelne Bahnen, gegebenenfalls unter zwischenschaltung einer Abdichtung, auf den Balken (13) aneinander.

Fig 1

Croydon Printing Company Ltd.

Die Erfindung bezieht sich auf eine Einrichtung zur Gewinnung von Wärmeenergie aus auf ein Dach fallender Sonnenstrahlung nach dem Oberbegriff des Anspruchs 1.

Eine derartige Einrichtung hat den Vorteil, daß sie völlig unabhängig von der Lage der Dachsparren installiert werden kann, da ihre Installation erst oberhalb der vorhandenen Dachschalung , gegebenenfalls mit darauf verlegter Dachpappe beginnt. Die Montage einer solchen Einrichtung kann also sehr großflächig ausgeführt werden, d.h. das gesamte Dach läßt sich ohne Unterteilung als ein einziger Kollektor auslegen.

Der Zeichnung der DE-OS 28 56 052 läßt sich eine Einrichtung nach dem Oberbegriff des Anspruches 1 entnehmen. Dabei ist die wärmeisolierende Unterschicht aus einer Isoliermasse in einem profilierten Blech sowie aus darauf angeordneten Isolierplatten gebildet. Die beiden Seitenkanten jeder vom First zur Traufe verlaufenden Bahn der lichtdurchlässigen Abdeckung liegen auf jeweils einem vom First zur Traufe verlaufenden Balken auf. Je zwei benachbarte Balken sind auf einem Bohlen angeordnet, der sich zwischen den einzelnen Isolierplatten vom First zur Traufe erstreckt und auf dem profilierten Blech befestigt ist.

Die einzelnen Bahnen der lichtdurchlässigen Abdeckung sind im Abstand voneinander angeordnet. Um zu verhindern, daß der Niederschlag, der in den Spalt zwischen einander benachbarten Bahnen der lichtdurchlässigen Abdeckung eindringt, zu wärmeisolierenden Unterschicht gelangt, ist auf jeder der Bohlen unterhalb des Spalts eine vom First zur Traufe verlaufende Regenrinne vorgesehen.

Durch den Spalt zwischen den einzelnen Bahnen der lichtdurchlässigen Abdeckung entweicht jedoch ein großer Teil der durch das Kollektorblech aufgeheizten Luft nach außen, so daß das Kollektorblech und damit die Flüssigkeit in den Rohren nur unzureichend erwärmt wird. Hinzu kommt, daß sich die Luftfeuchtigkeit der Atmosphäre, die durch den Spalt zwischen den einzelnen Bahnen eindringt, in der wärmeisolierenden Unterschicht und an der lichtdurchlässigen Abdeckung niederschlagen kann. Da sie kaum entfernbar ist, sammelt sie sich in der wärmeisolierenden Unterschicht an, wodurch deren Isolierwirkung stark beeinträchtigt bzw. fast völlig beseitigt wird. Das Beschlagen der lichtdurchlässigen Abdeckung hat eine entsprechende Verminderung des Durchgangs der Sonnenstrahlung zur Folge.

Weiterhin verlaufen bei der Einrichtung nach der DE-OS 28 56 052 die Flüssigkeit führenden Rohre parallel zu den Regenrinnen auf den Bohlen, also vom First zur Traufe. Am firstseitigen Ende und am traufenseitigen Ende der Rohre muß also jeweils ein Sammelrohr vorgesehen sein. Das heißt, zwischen jedem vom First zur Traufe verlaufenden Rohr und dem first- sowie traufenseitigen Sammelrohr muß jeweils eine Schweißverbindung geschaffen werden. Abgesehen von dem erheblichen Arbeitsaufwand , wird durch die zahlreichen Schweißverbindungen die Gefahr von Undichtigkeiten durch fehlerhafte Schweißstellen entsprechend erhöht. Auch ist das so zusammengeschweißte Rohrsystem starr und daher nicht in der Lage, große Spannungen, wie sie durch hohe Temperaturschwankungen auftreten können, aufzunehmen. Auch ist die Verweilzeit der Flüssigkeit in den Rohren zwischen den beiden Sammelrohren verhältnismäßig kurz, so daß der Wärmeübergang zwischen dem Kollektorblech und der Flüssigkeit in den Rohren zu Wünschen übrig läßt.

Der Erfindung, wie sie in den Ansprüchen gekennzeichnet ist, liegt die Aufgabe zugrunde, den Wirkungsgrad und die Zuverlässigkeit einer Einrichtung, wie sie im Oberbegriff des Anspruchs 1 umrissen ist, ohne, jedenfalls ohne nennenswerte zusätzliche Material- und Montagekosten zu erhöhen.

Die einzelnen Bahnen der lichtdurchlässigen Abdeckung können mit einer Klemmprofilvorrichtung gemäß dem DE-GM 81 26 507.7 auf den Balken auf der Dachschalung befestigt werden. Ihre Breite kann je nach Bedarf variiert werden. Auch können sie an jede Dachform angepaßt werden. Als lichtdurchlässige Abdeckung eignen sich insbesondere Polycarbonat-Hohlplatten. Diese werden mit einer Breite von einem Meter und einer Länge von 12 Metern geliefert. Die schwer lösbare Abdichtungsfrage stellt sich bei der erfindungsgemäßen Einrichtung also nicht.

Das Kollektorblech ist vorzugsweise mit Solarlack beschichtet.

Die Rohrschlangen (vorzugsweise aus Kupfer) können unabhängig von der Dachkonstruktion, d.h. dem Dachsparrenabstand usw., über das gesamte Dach ausgelegt werden. Dies bringt eine weitere Kosteneinsparung bei der Installation und entscheidende Vorteile bei der Abdichtung der Rohrverbindungen mit sich. Auch können sich die Rohrschlangen bei Temperaturschwankungen ohne Schaden bewegen.

Das Dach kann erfindungsgemäß auch für den Warmluftbetrieb ausgelegt werden. Dafür wird an einem traufenseitigen Ende einer Stirnseite des Dachs eine Öffnung für den Luftzutritt und an der gegenüberliegenden Stirnseite firstseitig eine Öffnung für den Warmluftaustritt vorgesehen. Unmittelbar nach der Luftaustrittsöffnung kann sodann ein Luft/Wasser-Wärmeaustauscher installiert werden, wenn statt einer Warmluftheizung eine solche mit Warmwasser gewünscht wird, bzw. wenn gleichzeitig warmes Brauchwasser aufbereitet werden soll. Zur Bildung eines geschlossenen Luftkreislaufs ist die Luftaustrittsöffnung mit der Lufteintrittsöffnung über einen Luftverbindungskanal verbunden. Die Luftumwälzung erfolgt mittels eines in dem Luftverbindungskanal vorgesehenen Ventilators.

Als besonders leistungsfähig ist diejenige Ausführungsform der erfindungsgemäßen Einrichtung anzusehen, bei der sowohl ein Flüssigkeitsbetrieb als auch ein Warmluftbetrieb vorgesehen ist.

Nachstehend ist eine Ausführungsform der Erfindung anhand der beigefügten Zeichnung beschrieben. Es zeigen:

Figur 1     eine perspektivische Ansicht eines Dachs
            mit der erfindungsgeaén Einrichtung,
            wobei die lichtdurchlässige Abdeckung
            teilweise entfernt worden ist;

Figur 2     einen Querschnitt durch das Dach gemäß

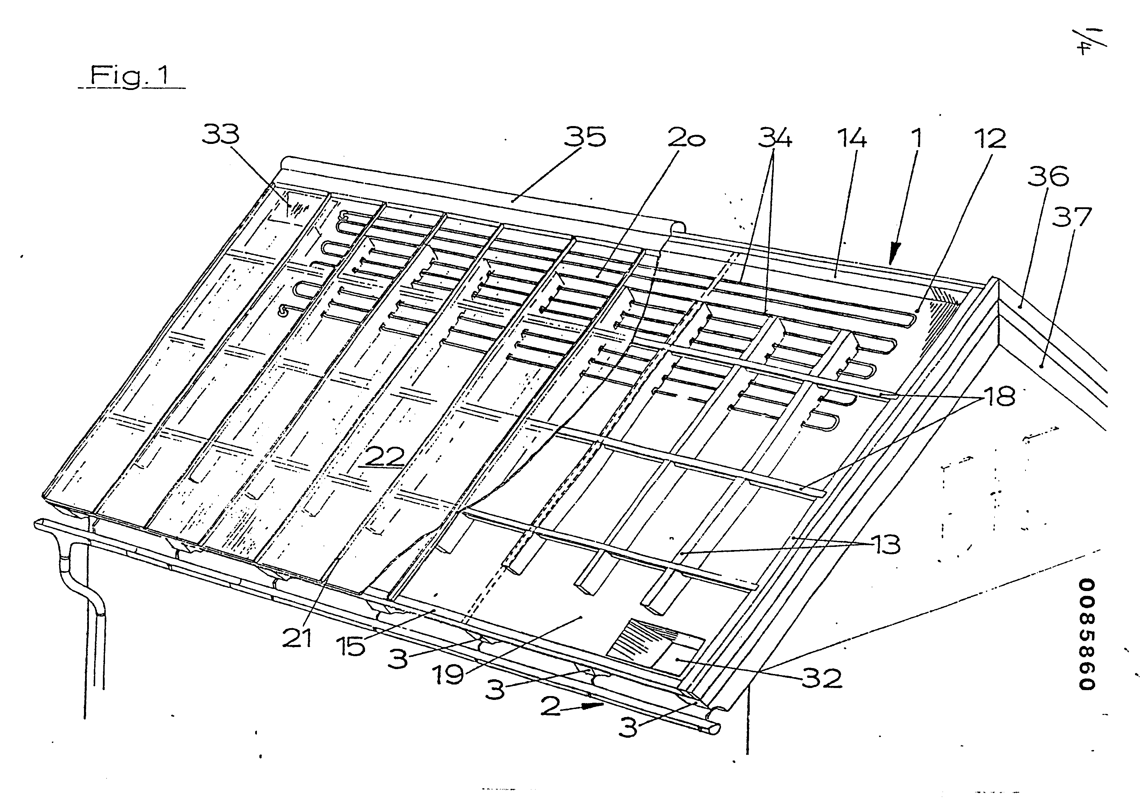

            Figur 1, wobei die Wärmeaustauschrohrschlangen
            weggelassen sind;

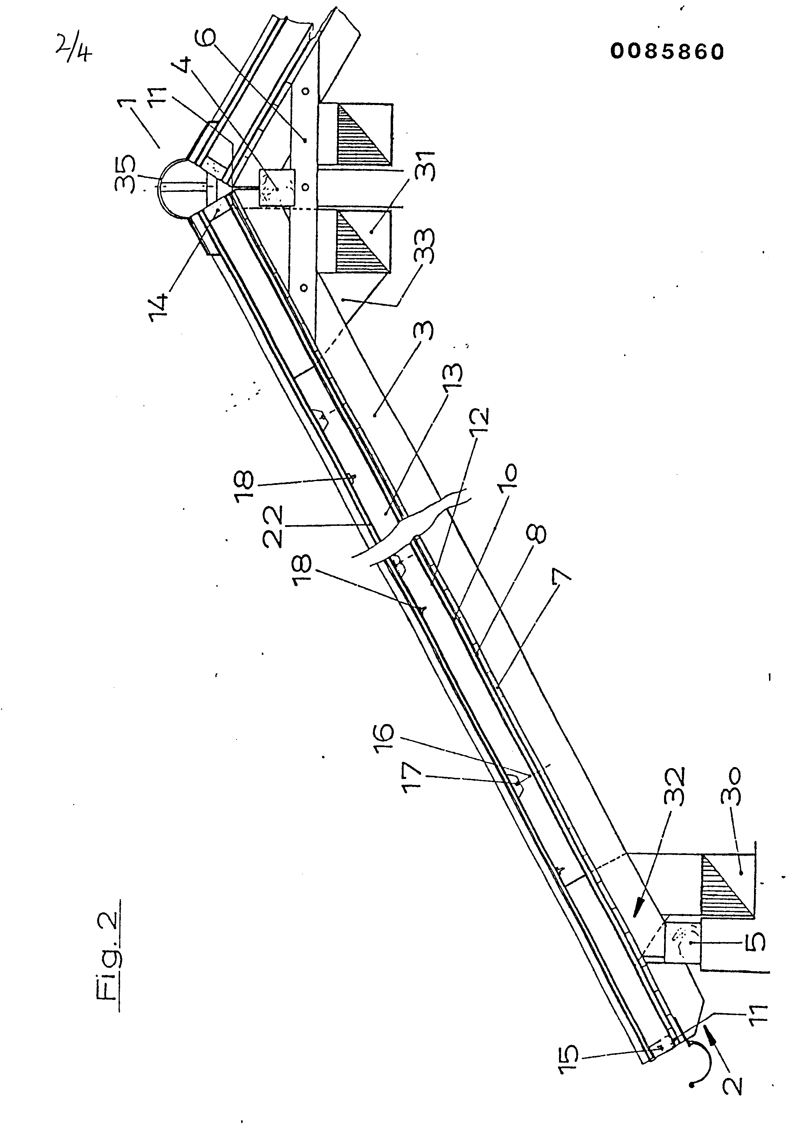

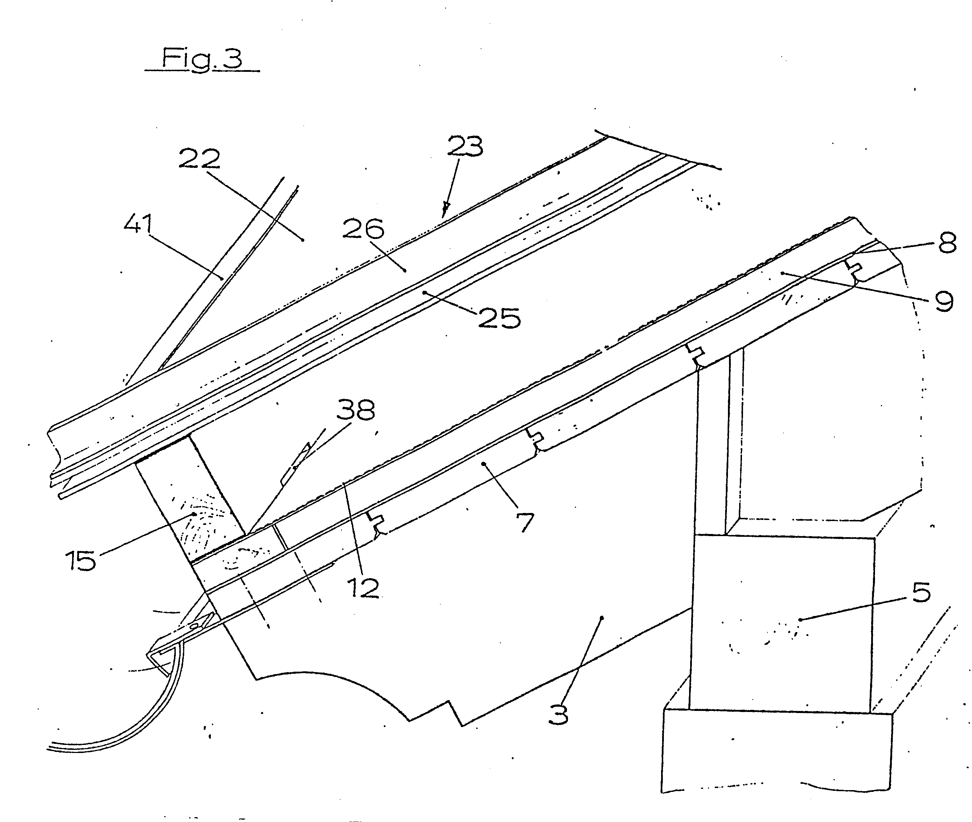

Figur 3     eine Ansicht des traufenseitigen Endes
            des Dachs gemäß Figur 2 in vergrößerter
            Wiedergabe; und

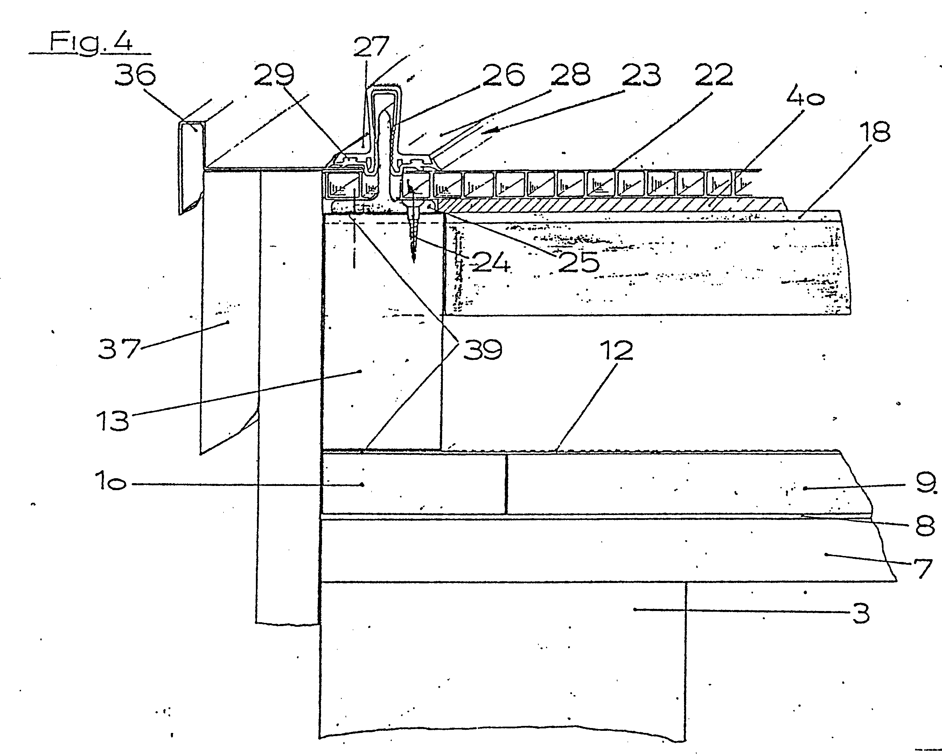

Figur 4     einen Schnitt durch das Dach parallel
            zum First an einer Dachstirnseite
            in vergrößerter Wiedergabe.

0085860

-5-

Das in der Zeichnung dargestellte Giebeldach besteht aus vom First 1 zur Traufe 2 verlaufenden Dachsparren 3, die auf der Firstpfette 4 und der Fußpfette 5 aufliegen. Mit 6 ist eine Zange bezeichnet, auf der die Firstpfette 4 aufliegt. Auf die Dachsparren 3 ist außen die aus einzelnen Brettern bestehende Dachschalung 7 aufgenagelt, auf die die Dachpappe 8 als abdichtende Dachabdeckung aufgebracht ist. Insoweit entspricht das Dach also der heutzutage insbesondere bei Mehr- und Einfamilienhäusern fast ausnahmslos verwirklichten Dachkonstruktion.

Erfindungsgemäß ist nun auf die Dachpappe 8 eine wärmeisolierende Unterschicht 9, beispielsweise aus Steinwollplatten, aufgebracht. Ferner sind in Richtung vom First 1 zur Traufe 2 verlaufende Bretter 10 sowie am Traufen- und firstseitigen Ende des Dachs parallel zum First 1 verlaufende Bretter 11, 11 auf der Dachpappe 8 bzw. der Dachschalung 7 verlegt und darauf befestigt. Die Bretter 10, 11, 11 können gegen Brand- und Fäulnisbildung imprägniert sein.

Alsdann ist in großen Bahnen das beschichtete schwarze Kollektorblech 12, vorzugsweise aus Aluminium, auf das Dach aufgebracht. Die einzelnen Bahnen des Kollektorblechs 12 sind mit hitzefesten Abdichtbändern gegenseitig abge-dichtet. Die Bahngröße der Kollektorblechbahnen 12 kann beispielsweise 6 x 1 m betragen.

Auf dem Kollektorblech 12 sind nun gegenüber den Brettern 10 bzw. 11 und 11 in Richtung vom First 1 zur Traufe 2 verlaufende Vierkantbalken 13 bzw. am first- und traufenseitigen Dachende parallel zum First 1 verlaufende Vierkantbalken 14, 15 angeordnet.

Die Balken 13 sowie 14 und 15 werden beispielsweise mittels Gestellschrauben 16, deren Köpfe in Ausnehmungen 17 in den Balken 13, 14 und 15 versenkt sind, auf der darunterliegenden Dachschalung 7 befestigt.

Anschließend erfolgt eine Verlegung von parallel zum First verlaufenden Versteifungsprofilen 18, die in die vom First 1 zur Traufe 2 verlaufenden Balken 13 eingelassen sind. Die Versteifungsprofile 18 sind vorzugsweise T-Profile, beispielsweise aus Aluminium oder verzinktem Stahl. Ihre Anzahl richtet sich nach dem zu erwartenden Schnee- und Winddruck, der auf das Dach einwirkt.

Die vom First 1 zur Traufe 2 verlaufenden Balken 13 sind mit Abstand von den am traufe- und am firstseitigen Dachende parallel zum First 1 verlaufenden Balken 15 bzw. 14 unter Bildung von Kanälen 19 bzw. 20 angeordnet. Die Kanäle 19 und 20 werden gleichfalls von vorzugsweise T-Profilen 21 aus Aluminium oder verzinktem Stahl überbrückt, die in die sich in Richtung vom First 1 zur Traufe 2 erstreckenden Balken 13 angeschraubt werden.(Fig. 1).

Anschließend wird die lichtdurchlässige Abdeckung 22 verlegt, die vorzugsweise aus Polycarbonat-Hohlplatten besteht.

Die Befestigung der Abdeckung bzw. der Hohlplatten 22 kann mit in der in Figur 4 dargestellten Klemmprofilvorrichtung 23 erfolgen, die aus einem auf einen sich in Richtung vom First 1 zur Traufe 2 erstreckenden Balken 13 mittels Schrauben 24 befestigten T-Profil 25, einem über den senkrechten Schenkel des T-Profils 25 schiebbaren U-Profil 26 mit Flanschen 27, 28 an seiner nach unten gekehrten Öffnung und einem zwischen den Profilen 25 und 26 angeordneten Gummiprofil 29 besteht, wobei die Flansche 27, 28 dem benachbarten Rand der Abdeckung bzw. der benachbarten Hohlplatten 22 übergreifen. Die Klemmprofilvorrichtung 23 ist in der DE-GM 81 26 507.7 näher erläutert.

Gemäß Figur 2 verlaufen unter dem Dach auf jeder Seite des Giebeldaches ein Zuluftverteilerkanal 30 sowie ein Warmluftsammelkanal 31.

Vom Zuluftverteilerkanal 30 führt am unteren stirnseitigen Dachende eine Lufteintrittsöffnung 32 inden Hohlraum zwischen dem Kollektorblech 12 und der Abdeckung 22. Die über die Lufteintrittsöffnung 32 zugeführte Luft strömt durch den Kanal 19 und zwischen den Balken 13 zum First 1 und gelangt von dort durch den Kanal 20 zu einer Luftaustrittsöffnung 33, von wo sie in den Warmluftsammelkanal 31 gesaugt wird. Auf ihrem Weg von der Lufteintrittsöffnung 32 zu der Luftaustrittsöffnung 33 führt die Luft die von dem Kollektorblech 12 absorbierte Sonnenenergie als Wärme ab.

Um warmes Brauchwasser zu erzeugen, können Kupferrohrschlangen 34 in Sicken des Kollektorbleches 12 angeordnet sein, wobei die Sicken in dem Kollektorblech 12 vor dessen Verlegung ausgebildet werden und die Rohrschlangen 34 vor der Montage der Abdeckung 22 in den Sicken verlegt werden.

Auch kann ein (in der Zeichnung nicht dargestellter) Wärmeaustauscher der Luftaustrittsöffnung 33 nachgeschaltet sein. Statt Brauchwasser kann auch eine andere Flüssigkeit erwärmt werden, die beispielsweise einem Erhitzer zugeführt wird, in dem die Wärme in Wärmespeichermassen (beispielsweise dem Erdboden) für eine spätere Entnahme gespeichert wird.

Eine Firstkappe 35 erstreckt sich über den keilförmigen Raum zwischen den firstseitigen, sich parallel zum First 1 erstreckenden Balken 13 beiderseits des Giebels.

Ein Anschlußblech 36 ist auf der Stirnschalung 37 vorgesehen. Um eine Entwässerung des Hohlraums zwischen dem Kollektorblech 12 und der Abdeckung 22 zu gewährleisten, sind in dem Balken 15 am traufenseitigen Ende Durchlässe 38 vorgesehen.

Wie aus Figur 3 und 4 ersichtlich, erstreckt sich das Kollektorblech 12 von der wärmeisolierenden Unterschicht 9 an der Innenseite der Balken 15 (und 14) sowie 13 nach oben.

An ihrer Unterseite und ihrer Oberseite sind die Balken 13, 14 und 15 mit einer Dichtungsschicht 39 versehen; desgleichen ist zwischen den T-Profilen 18, 21 und der Abdeckung 22 eine Dichtungsschicht 40 vorgesehen, wie insbesondere aus Figur 4 ersichtlich.

Ein U-Profil 41 übergreift das traufenseitige Ende der Abdeckung 22 (Figur 3).

Corbelia GmbH, 5412 Puch 321, Österreich

## Einrichtung zur Gewinnung von Wärmeenergie aus auf ein Dach fallender Sonnenstrahlung

### P a t e n t a n s p r ü c h e

1. Einrichtung zur Gewinnung von Wärmeenergie aus auf ein Dach fallender Sonnenstrahlung, mit einer wärmeisolierenden Unterschicht auf der Dachschalung bzw. auf der auf der Dachschalung befindlichen abdichtenden Dachabdeckung, einem auf der wärmeisolierenden Unterschicht liegenden schwarzen Kollektorblech und einer durch Bahnen gebildeten lichtdurchlässigen Abdeckung auf auf der Dachschalung befestigten, in Richtung von First zur Traufe verlaufenden Balken sowie Flüssigkeit führenden Rohren zwischen Kollektorblech und lichtdurchlässiger Abdeckung, dadurch gekennzeichnet, daß unter Bildung einer nach außen abgedichteten lichtdurchlässigen Abdeckung (22) deren einzelne Bahnen , gegebenenfalls unter Zwischenschaltung einer Abdichtung, auf den Balken (13) aneinanderstoßen, und daß die Flüssigkeit führenden Rohre als Rohrschlange. (34) ausgebildet sind.

2. Einrichtung nach Anspruch 1, dadurch gekennzeichnet, daß die einzelnen Biegungen der Rohrschlange (34) abwechselnd der einen und der anderen Dachstirnseite benachbart sind und sich die Abschnitte der Rohrschlange (34) zwischen den einzelnen Biegungen im wesentlichen waagrecht erstrecken.

3. Einrichtung nach Anspruch 1 oder 2, dadurch gekennzeichnet, daß die Abdichtung zwischen einander benachbarten Bahnen der lichtdurchlässigen Abdeckung (22) durch ein T-Profil (25) mit zwischen dem jeweiligen Balken (13) und der Abdeckung (22) befindlichen Querbalken des T-Profils (25) und ein über den senkrechten Schenkel des T-Profils (25) schiebbares U-Profil (26) mit Flanschen (27, 28) an seiner nach unten gekehrten Öffnung gebildet wird.

Fig.1

Fig. 2

0085860

## Fig.3

Fig.4

0085860

<br>

**Europäisches Patentamt**

# EUROPÄISCHER RECHERCHENBERICHT

**0085860**
Nummer der Anmeldung

EP 83 10 0445

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-2 826 832 (HASTWELL) * Figur 1, Positionen 25-28; Seite 16, Absatz 3 * | 1-3 | F 24 J 3/02 |
| | --- | | |
| Y | DE-U-8 031 975 (PILLER) * Figur 1, Position 30; Seite 7, Absatz 4 * | 1-3 | |
| | --- | | |
| Y | US-A-4 263 896 (ZEBUHR) * Figur 1, Positionen 24, 41-43 * | 3 | |
| | --- | | |
| A | DE-A-2 809 550 (SCHÄFER WERKE GMBH) * Figuren 3-5 * | 1 | |
| | --- | | |
| A | DE-A-3 000 289 (SPIELVOGEL) * Figur 2 * | 2 | RECHERCHIERTE SACHGEBIETE (Int. Cl. 3) |
| | ----- | | F 24 J 3/00 |

Der vorliegende Recherchenbericht wurde für alle Patentansprüche erstellt.

| Recherchenort BERLIN | Abschlußdatum der Recherche 11-04-1983 | Prüfer PIEPER C |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82